# EUROPEAN PATENT APPLICATION

(11) **EP 4 691 736 A1**
(43) Date of publication of application: **11.02.2026**
(21) Application number: 25154278.3
(22) Date of filing: 27.01.2025
(51) Int. Cl.: B29C 64/118, B29C 64/209, B33Y 30/00, B29C 64/20

(54) **3D PEN FOR PRODUCING THREE-DIMENSIONAL OBJECTS FROM THERMOPLASTIC MATERIAL**

(30) Priority: 05.08.2024 PL 44945824
(71) Applicant: Edustick Spolka Z Ograniczona Odpowiedzialnoscia, 04-713 Warsaw (PL)
(72) Inventor: MAZURKIEWICZ, Mateusz, 04-695 Warsaw (PL); WIERBILOWICZ, Damian, 03-194 Warsaw (PL); MAZURKIEWICZ, Maciej, 04-776 Warsaw (PL)
(74) Representative: LDS Lazewski Depo & Partners

(57) **Abstract**

A 3D pen for producing three-dimensional objects from thermoplastic material comprising a bottom housing (1) and top housing (2), a heater (3), a heater cover (4), a nozzle (5) and an operation controller board (6) and a power socket (14) has a motor (7) and a gear reducer (8) forming a separate power module (9) placed in an opening (10) in the top housing (2) by means of latches (11), wherein a tube for the thermoplastic material consists of two sections, a rear tube (12) positioned between a rear face of the bottom housing (1) and the gear reducer (8), and a front tube (13) positioned between the motor (7) and the nozzle (5).

## Description

The subject of the invention is a 3D pen for producing three-dimensional objects from thermoplastic material.

The principle of modern 3D printing pens is essentially based on the print heads used in 3D printers, which were developed in the mid-1980s (inventor Chuck Hull), and the technique of embedding molten material was developed in the late 1980s (inventor Scott Crump). In the middle of the first decade of the 21st century a 3D printer for home use was designed (Adrian Bowyer). In turn, at the beginning of the second decade of the 21st century 3D pens were designed, as some sources report, by Peter Dilworth and Maxwell Bogue of Wobbleworks. It should be noted that the aforementioned inventors designed the devices, however, they were not the originators of 3D printing. This is particularly true for dimensional printing and the 3D pen.

The device known from U.S. patent description US1619817A has a heating element that is removable from a wax magazine or container barrel, and the wax is then inserted into a tube through an opening, wherein the wax is preferably in the form of molded sticks. The charge of wax heated by the heating element connected to the electric circuit melts and is applied to the material.

A marker instrument known from U.S. patent description US2272780A, which can be used to apply a colored fluid to fabrics or other articles for marking them in any manner desired, is provided with a fusible marker compound which is normally in a solid state, but which is reduced to a fluid state for application purposes by the use of an electric heating element incorporated in the instrument. The instrument is provided with a nozzle having a liquid chamber for receiving the melted compound and which is released in the fluid state by a ball valve at the on the end of the instrument. The invention also includes means for feeding the fusible compound to an electric heater.

A gun type instrument for melting and extruding plastic material is known from U.S. patent description No. US2567960A, wherein said instrument is primarily designed for use in the manufacture of fishing flies by applying the molten plastic material to fishhooks to form thereon elements simulating the body, legs or feelers, and other members of insects. The primary object of the invention is to provide a comparatively simple and efficient instrument of the above kind by means of which the plastic material may be readily melted and readily applied to the hooks or other objects as desired.

A three-dimensional (3D) drawing device known from a European patent description No. EP2928672B1 (priority claimed from U.S. Application No. US9102098B2) has a housing configured for manipulation by a user's hand and to accept a feed stock, which in certain embodiments is a strand of thermoplastic material. The drawing device comprises a nozzle assembly having an exit nozzle and a motor connected with a gear train coupled with the strand of thermoplastic feed stock configured such that rotation of the motor causes the feed stock to be extruded out of the exit nozzle to form a three-dimensional object.

A 3D printing pen known from a Chinese patent description No. CN103341975A consists of a casing, a spray head, a heating cavity, a motor device, a feeding tube, a control board, and a key board wherein the heating cavity, the motor device, the feeding tube, the control board, and the key board are all set in the housing.

A 3D printing pen known from a Chinese patent description No. CN103707511A consists of an outer casing having an outlet at the top end, and a heat discharging mechanism, a feeding and conveying mechanism, a fan, a feeding tube and a control mechanism disposed in the outer casing, wherein a control mechanism controls the operation of the heat discharging mechanism, the feeding and conveying mechanism and the fan.

An extrusion device known from a Chinese patent description No. US10040235B2 comprises a filament-engaging mechanism that pushes the fiber received by the device through a heater and a nozzle. A user can manipulate a movable control member during operation of the device to change the extrusion rate. The extrusion device can operate in continuous flow mode. The extrusion device can be configured to operate with low electricity consumption.

A 3D pen known from a U.S. patent description No. US20180281281A1 has a shell, a material feeding device, a heating device and a control chip, wherein a material feeding opening is provided in the shell; the material feeding device has a material feeding motor, a motion transmission mechanism and a material feeding mechanism; the material feeding motor is longitudinally disposed along the shell; a single start worm is provided at a rotation axis of the material feeding motor; the single start worm is connected with the motion transmission mechanism; the material feeding mechanism comprises a material feeding gear and an assistant wheel; the motion transmission mechanism is connected with the material feeding gear; a wire feeding gap is provided between the material feeding gear and the assistant wheel; the heating device comprises a nozzle and a heating cavity; the material feeding motor and the heating cavity are both electrically connected with the control chip.

A 3D drawing arrangement known from U.S. patent description No. US11590704B1 comprises a feeding passage, a heater, a filament moving system and a controller which comprises a control circuit and a finger detector, electrically connected to the control circuit, wherein when the finger detector detects a presence of a finger of a user which is aligned with the finger detector, the control circuit starts operation of the filament moving system to feed the filament to the heater along the feeding passage, so that the filament is heated and melted by the heater to produce the melted material flow.

The described 3D printing pens have a similar design and mainly consist of a body ended with a nozzle, a heating zone, a tube feeding a stick material (most commonly known as filament), a control panel and buttons, transport elements (rollers, gears) and a drive (usually a stepper motor). All the components of the device/instrument/pen are combined together and placed in a housing. In case of failure of the motor or gearbox feeding the material, the device is either discarded or requires expensive repair by a specialist.

The aim of the invention is to develop a 3D pen for producing three-dimensional objects from thermoplastic material, in which a motor and a gear reducer form a separate power module positioned in an opening in the top housing.

The 3D pen for producing three-dimensional objects from thermoplastic material according to the invention comprises a bottom and top housing, a heater, a heater cover, a nozzle and operation controller board and a power socket, is characterized in that the motor and the gear reducer form a separate power module placed in an opening in the top housing by means of latches, wherein a tube for thermoplastic material consists of two sections, a rear tube positioned between a rear face of the bottom housing and the gear reducer, and a front tube positioned between the motor and the nozzle.

The subject of the invention is depicted in an embodiment in the figure, which illustrates:

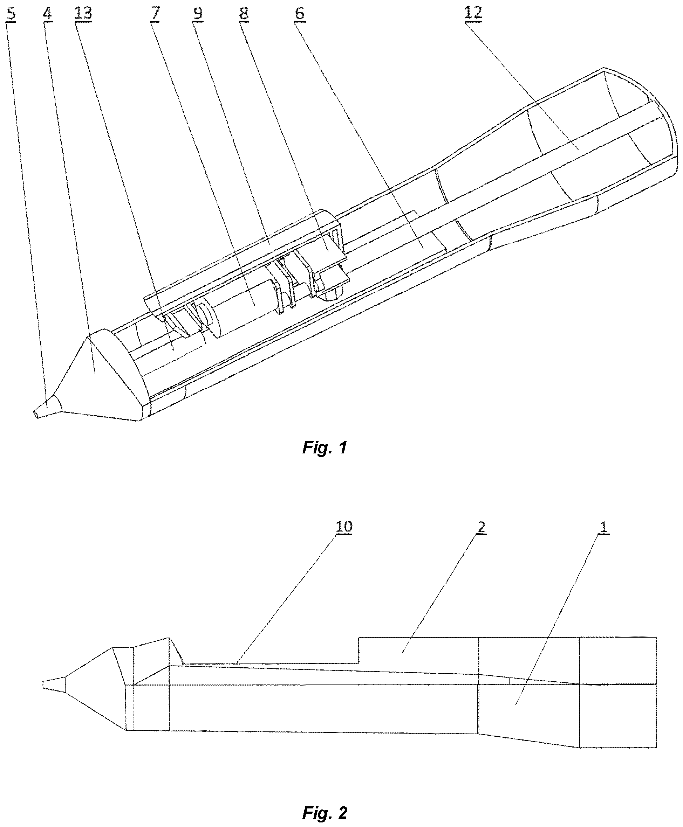

Fig. 1 perspective view of the bottom housing and the module with exposed motor and gear reducer;
Fig. 2 orthogonal projection of the housing with the visible opening for the power module;

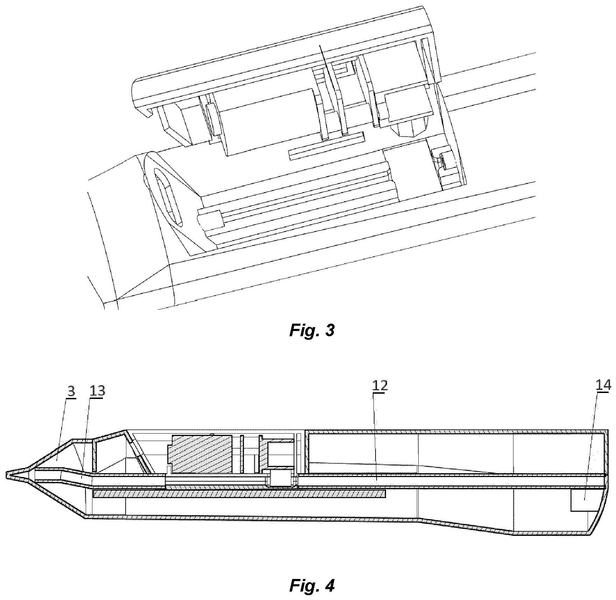

Fig. 3 perspective view of a section of the top housing and a section of the power module;
Fig. 4 cross section of the pen;

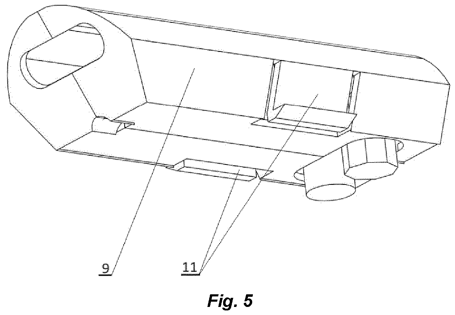

Fig. 5 perspective view of the power module;

### Embodiment

The 3D pen for producing three-dimensional objects from thermoplastic material has the bottom housing (1) and the top housing (2), the heater (3), the heater cover (4), the nozzle (5), the operation controller board (6) and the power socket (14), and the motor (7) and the gear reducer (8) in the form of a separate power module (9) placed in the opening (10) in the top housing (2) by means of latches (11), while inside the housing two sections of tube for thermoplastic material are positioned: the rear tube (12) positioned between the rear face of the bottom housing (1) and the gear reducer (8), and the front tube (13) positioned between the motor (7) and the nozzle (5).

In contrast to a standard device for producing 3D objects from thermoplastic material, thanks to use of the separate power module, the disclosed 3D pen allows for quick replacement of the power module directly by virtually every user, which is important especially in case of failure of the motor or the gearbox feeding the material. Typically, the device would either be discarded or require expensive repair by a specialist. Thanks to such a solution, not only significant material savings have been achieved, but also the environment is protected (i.a. reducing the amount of waste, reducing the need to manufacture basic pen components), making this invention an environmentally friendly solution.

## Claims

1. A 3D pen for producing three-dimensional objects from thermoplastic material, comprising a bottom housing (1) and a top housing (2), a heater (3), a heater cover (4), a nozzle (5), a tube for thermoplastic material, an operation controller board (6) and a power socket (14), **characterized in that** a motor (7) and a gear reducer (8) form a separate power module (9) placed in an opening (10) in the top housing (2) by means of latches (11), wherein a tube for thermoplastic material consists of two sections: a rear tube (12) positioned between a rear face of the bottom housing (1) and the gear reducer (8), and a front tube (13) positioned between the motor (7) and the nozzle (5).
